Europäisches Patentamt

(19) European Patent Office

Office européen des brevets

(11) Publication number: **0 194 119 B1**

(12) # EUROPEAN PATENT SPECIFICATION

(45) Date of publication of patent specification: **19.06.91**   (51) Int. Cl.⁵: **B30B 11/26**

(21) Application number: **86301473.4**

(22) Date of filing: **28.02.86**

(54) Apparatus and method for quantitatively extruding food material.

(30) Priority: **02.03.85 JP 41482/85**

(43) Date of publication of application:
**10.09.86 Bulletin 86/37**

(45) Publication of the grant of the patent:
**19.06.91 Bulletin 91/25**

(84) Designated Contracting States:
**AT BE CH DE FR GB IT LI NL SE**

(56) References cited:
EP-A- 0 187 548    CH-A- 245 606
FR-A- 2 527 139    GB-A- 565 031
GB-A- 736 739    US-A- 2 810 181
US-A- 2 966 842

(73) Proprietor: **RHEON AUTOMATIC MACHINERY
CO. LTD.**
**2-3, Nozawa-machi**
**Utsunomiya-shi Tochigi-ken(JP)**

(72) Inventor: **Hayashi, Torahiko**
**3-4, Nozawa-machi**
**Utsunomiya-shi Tochigi-ken(JP)**
Inventor: **Tashiro, Yasunori**
**611-110, Yokoyama-cho**
**Utsunomiya-shi Tochigi-ken(JP)**

(74) Representative: **Piesold, Alexander J. et al
Frank B. Dehn & Co. Imperial House 15-19
Kingsway
London WC2B 6UZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus and method for quantitatively extruding food material or the like by means of a piston, and more particularly to such an apparatus and method for quantitatively extruding flowable food material such as cream or jam, solid food material such as vegetables, fruit, or pieces of cooked fish or meat, or cooked food comprising solid food material and paste or the like, all by way of example, from a nozzle to inject the same into bread or confectionery. Such an apparatus is shown in GB-A-736739

There has been provided an apparatus for injecting food material or the like into an article, in which a hopper, a nozzle, and a cylinder containing a piston are disposed around a valve mechanism. When the valve is caused to communicate the hopper and the cylinder, the food material in the hopper can be drawn into the cylinder by retracting the piston, and the material can then be extruded from the nozzle by causing the valve to communicate the cylinder and the nozzle and advancing the piston. In this apparatus, however, the material cannot be drawn into the cylinder unless it comprises certain kinds of material which are relatively fluid. That is, less fluid material, or materials in which a large amount of solid is mixed or which consist only of solid cannot be drawn in, because if the passage from the hopper to the cylinder is made wider, suction becomes weak, while if it is made sufficiently narrow for suction purposes, clogging occurs.

A screw feeder for extruding food material has also been provided, by means of which plastic food material, i.e. less fluid material, could effectively be extruded, but the material could not be extruded in a sufficiently quantitative manner. Such a screw feeder is not, of course, usable with materials consisting only of solids.

Thus these apparatuses can handle solid materials only if they are very soft or if they are very small and mixed with fluid materials.

Viewed from one aspect the present invention provides an apparatus for quantitatively extruding food material, comprising a hopper, a frame supporting the hopper and having therein a chamber communicating with the hopper and a first port and a second port communicating with the chamber, the first and second ports being disposed opposite each other in the said frame, a piston mounted to co-operate with said first port, and an extrusion nozzle mounted to co-operate with said second port, characterized in that a food cylinder forming device is provided adjacent said chamber, said device comprising two or more wall portions at least one of which is movable towards another of said wall portions to form a cylindrical space open at front and rear ends thereof for containing food material, and away from the said other wall portion to enable food material to be introduced into said chamber, the front and rear ends of said cylindrical space communicating with said first and second ports respectively, and the said piston being advanceable, without applying any substantial pressure to the food material, from the said first port into the said cylindrical space to extrude the food material contained therein, and retractable to allow the food material to enter the chamber.

Viewed from another aspect the invention provides a method of quantitatively extruding food material comprising feeding food material from a hopper to a chamber below the hopper, temporarily enclosing the food material in the chamber to form a cylindrical body, and extruding said cylindrical body with a piston, without applying any substantial pressure to the food material.

Viewed from a further aspect the invention provides apparatus for quantitatively extruding food material, comprising a hopper, a chamber defined below the hopper to receive food material therefrom, means for temporarily enclosing food material in the said chamber to form a cylindrical body thereof, and means including a piston for extruding said cylindrical body of food material, withtut applying any substantial pressure to the food material.

In a preferred form of the invention a food cylinder forming device, which comprises a plurality of wall portions, is provided. The device is disposed below a hopper and in a frame which supports the hopper. The wall portions are movable towards each other by gearing to form a cylindrical space, the open rear and front ends of which communicate with first and second ports in opposite walls of the frame respectively. A nozzle is mounted to the second port and a piston is mounted to the first port. Since the chamber in the frame is very wide as compared with a conventional food suction system, even food material containing large-sized solids can be enclosed in the cylindrical space formed when the said wall portions close together. The thus formed cylindrical body of food material can then be extruded by the piston through the nozzle into an article.

Since an apparatus according to the present invention can confine the food material in the said chamber by means of the said food cylinder forming device, food material confined within the cylindrical space, even when it contains large-sized solids, can then be extruded by the piston through the nozzle without any trouble, and into bread or confectionery.

Thus, as apparatus according to the present invention does not need a valve mechanism or a piston and cylinder assembly for vacuum suction, food material containing even large-sized solids can be effectively extruded.

Some embodiments of the invention will now be described by way of example and with reference to the accompanying drawings, in which:-

Fig. 1 is an exploded perspective view of the wall portions of a food cylinder forming device of a first embodiment of the present invention;

Fig. 2 is a schematic perspective view of the device of Fig. 1;

Fig. 3 illustrates the operation of the wall portions of the device of Fig. 1, showing how the tips of the wall portions abut with each other to form a cylindrical space;

Fig. 4 is a partly cross-sectional front elevation view of the first embodiment of the invention;

Fig. 5 is a partly cross-sectional view of the first embodiment, on line A-A of Fig. 4; and

Figs. 6 to 10 are cross-sectional views of four further embodiments.

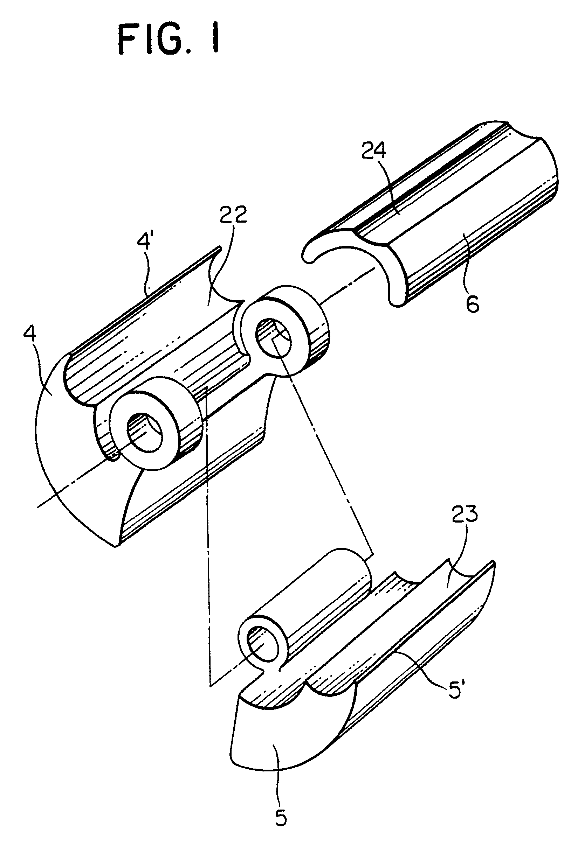

A first embodiment of the present invention will now be described with reference to Figs. 1-5.

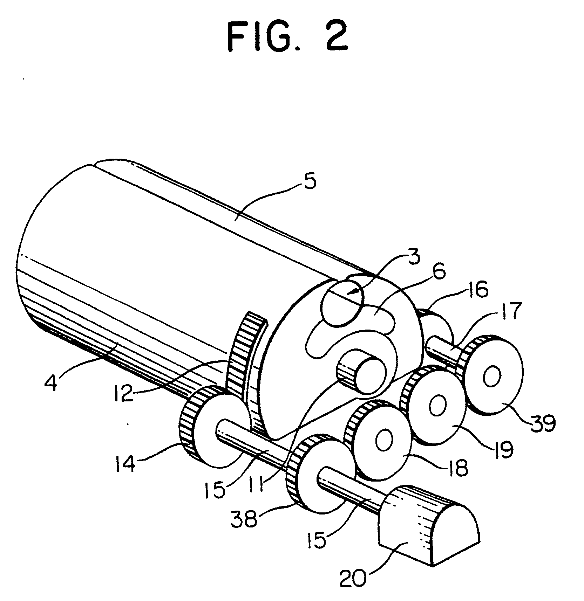

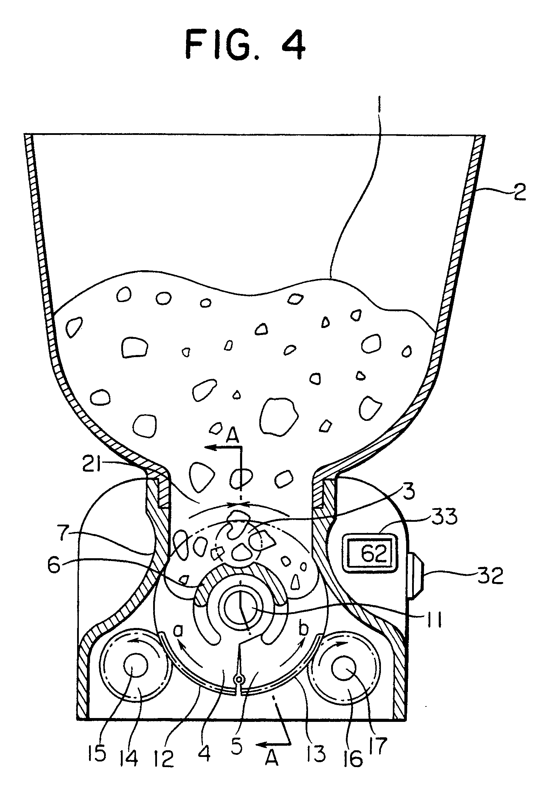

Three wall portions 4, 5 and 6 of a device for forming a food cylinder are shown separated in Fig. 1. The wall portions 4 and 5 are pivotally mounted on a pivot shaft 11 to form a hinge. Tips 4' and 5' of the wall portions 4 and 5 function to closely enclose food material and to apply increased load from a reversible motor 20. A wall portion 6 is adapted to be assembled with the wall portions 4 and 5 and is fixedly mounted on a frame 7. Inner surfaces 22 and 23 of the wall portions 4 and 5 and an upper surface 24 of the wall portion 6 are configured such that they form a cylindrical space 3 when the tips 4' and 5' abut, as shown in Fig. 2. The front and rear ends of the cylinder thus formed are open. Referring to Fig. 2, the wall portion 4 has an outer surface which is arcuate in cross-section, and a gear 12 is provided on said surface, which meshes with a gear 14 mounted on an end of a shaft 15, the other end of which is connected to reversible motor 20. The gear 14 is rotatable by the power transmitted from the reversible motor 20 and causes the gear 12 to rotate, thereby moving tip 4' of the wall portion 4 about the shaft 11 towards or away from the tip 5' of the wall portion 5. Similarly, a gear 13 (Fig. 4) provided on the arcuate outer surface of the wall portion 5 meshes with a gear 16 and moves the tip 5' of the wall portion 5 about the shaft 11 towards and away from the tip 4' of the wall portion 4, receiving power from the reversible motor 20 through the gear 16, a shaft 17 connected to the gear 16, a gear 39 connected to the shaft 17, a gear 19 meshing with the gear 39, a gear 18 meshing with the gear 19, and a gear 38 meshing with the gear 18 and mounted on the shaft 15. As the directions of rotation of the shafts 15 and 17 are opposite, the rotation of the shafts 15 and 17 causes the tips 4' and 5' of the wall portions 4 and 5 to move towards or away from each other.

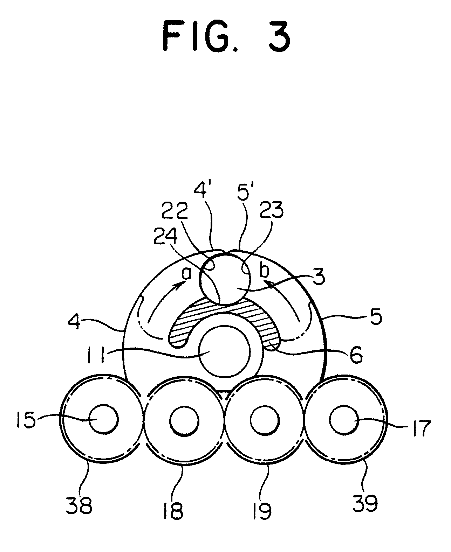

As shown by Fig. 3, the wall portions 4 and 5 can move in the directions indicated by arrows "a" and "b" until the tips 4' and 5' come into contact to form the cylindrical space 3. When the tips 4' and 5' move away from each other, the movement will stop when the surfaces 22 and 23 come to the position shown by the phantom lines. Fig. 4 shows a condition in which the bottom surfaces of the wall portions, as seen in Fig. 2, are about to engage each other and a further movement of the tips 4' and 5' away from each other is then prevented.

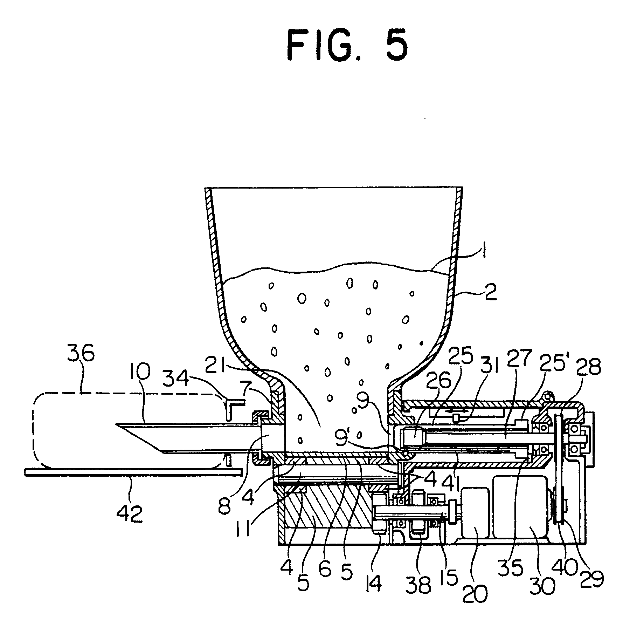

Figs. 4 and 5 show how the food cylinder forming device of Figs. 1 to 3, with the set of gears, is mounted on the frame 7 below a chamber 21.

Referring further to Fig. 4, a food material 1 containing solids is placed in a hopper 2 supported on the frame 7. The chamber 21 is formed in the frame 7 between the hopper 2 above it and the food cylinder forming device below it. The chamber 21 directly communicates with the hopper 2 without any obstruction between them. The outer surfaces of the wall portions 4 and 5 form part of a circle in cross-section and the shaft 11 is positioned at the center of the circle. The configuration of the walls 6 of the frame 7 is such that they tangentially abut the circle. A knob 32 is provided on the outer surface of the frame 7 and is used to select the volume of the food material to be injected into an article 36 (Fig. 5). The volume is selected by adjustment of the stroke of a piston 25, as explained below. The selected volume is indicated on a display panel 33.

As shown in Fig. 5, the pivot shaft 11 is mounted to the frame 7. The chamber 21 is provided with a first port 9 and a second port 8, which are aligned with, and are of the same size and configuration as, the rear and front end openings of the cylindrical space 3 formed by the food cylinder forming device. The piston 25 is located outside of the first port 9 and is slidable engageable in it so as to be able to pass through the port 9 in the direction of the second port 8.

The piston 25 comprises a cylinder with one end closed, and its inside surface is threaded. It has a ring form flange 25' at its open end. A cylindrical shaft 27 has an enlarged portion 26 at one end, which portion is externally screw threaded and engages the internal screw thread of the piston 25.

the other end of the shaft 27 is rotatably supported on the frame 7 through a bearing assembly. A pulley 28 is provided near this end of the shaft 27 and is connected by a belt 40 to a pulley 29 mounted on the output shaft of a reversible motor 30. A stop 31 is mounted on the frame 7 and is movable in the direction shown by the arrow. It selects a position at which the flange 25' of the piston 25 is stopped and generates a signal to cause reverse rotation of the motor 30. The stop 31 also generates a signal to the motor 20 to reverse its rotation. The position of the stop 31 is determined by the operation of the knob 32.

On the outer surface of the piston 25 a key groove 41 extends in the longitudinal direction and engages a key 9' projecting from the inner surface of the first port 9. This arrangement prevents the rotation of the piston 25 when the shaft 27 rotates. Thus the piston 25 is advanced or retracted along the key 9' by the shaft 27 rotating in one direction or the other, powered by the reversible motor 30. The stroke of the piston 25 is determined by the position of the stop 31. As already mentioned, when the flange 25' comes into contact with the stop 31 the forward movement of the piston 25 is stopped and its movement is reversed. On the other hand, when the rear end of the piston 25 abuts with a rear end switch 35 positioned at a suitable location, the switch 35 generates a stop signal for the reversible motor 30.

A nozzle 10 is mounted to the aforementioned second port 3. The inner diameter of the nozzle 10 is preferably equal to the inner diameter of the second port 8 and the cylindrical space 3, or it may be smaller. A contact switch 34 is disposed adjacent the nozzle 10, which functions to generate a signal to rotate the reversible motor 20 when the contact 34 is engaged by an article 36 or by an operator's hand.

The operation of this first embodiment of the present invention will now be described.

The food material 1 containing solids is charged in the hopper 2 and accumulates in the chamber 21. When the article 36, shown in broken lines, is placed on a table 42 and the nozzle 10 is inserted into the article 36, the contact switch 34 transmits a signal to the reversible motor 20 to cause it to rotate in a forward direction. The power of the motor 20 is transmitted through the shaft 15 and the series of gears to thereby rotate the wall portions 4 and 5 to cause the tips 4' and 5' to abut with each other. Thus, a portion of the food material is surrounded by the surfaces 22, 23 and 24, the rear end of the food material remaining in the nozzle 10 from the preceding operation, and the front end of the piston 25. Therefore, a cylindrical body of the food material is formed. The operator now turns the knob 32 to select the position of the stop 31, thereby determing the desired stroke of the piston 25. The stroke defines the volume of the food material 1 to be injected into the article 36, which is displayed on the display panel 33.

If solid pieces mixed in the food material 1 are larger than the inner diameter of the cylindrical space 3, the tips 4' and 5' can cut such pieces to enclose them within the cylindrical space 3. The reversible motor 20 is adapted to sense the increased load caused by the abutment of the tips 4' and 5' and then automatically stop its operation. It is preferable to provide a relay associated with the reversible motor 20, which actuates the reversible motor 30 when the reversible motor 20 is stopped. Thus the reversible motor 30 can be operated by the signal from such a relay, or by the operator through an input switch. The operation of the reversible motor 30 causes the advance of the piston 25, thereby extruding the food material 1 in the cylindrical space 3 into the nozzle 10.

When the flange 25' comes into contact with the stop 31 the latter sends a signal to the reversible motor 30 and the reversible motor 20 rotates in the reverse direction, whereby the piston begins to retract and the tips 4' and 5' of the wall portions 4 and 5 begin to move away from each other. The reverse rotation of the motor 30 stops when the rear face of the flange 25' comes into contact with the rear end switch 35, and the reverse rotation of the motor 20 stops when it senses an increased load caused by the abutment of the bottom surfaces of the wall portions 4 and 5. More food material can then enter the chamber 21 and accumulate there.

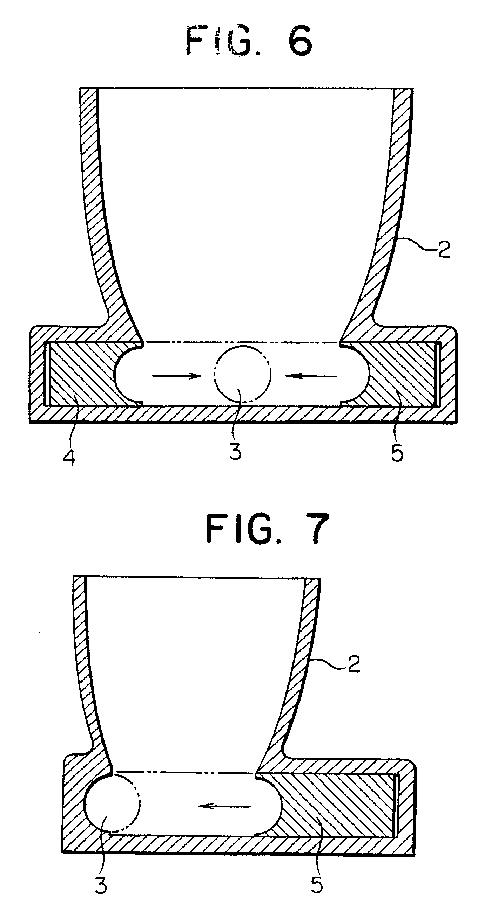

A second embodiment of the invention is shown in Fig. 6. Here the food cylinder forming device is composed of two wall portions 4 and 5 having respective longitudinal recesses, semi-circular in cross-section, which can horizontally approach each other to form a cylindrical space 3.

A third embodiment is shown in Fig. 7, in which only one wall portion 5 is adapted to move horizontally towards and away from another wall portion formed on the wall of the frame below the hopper 2.

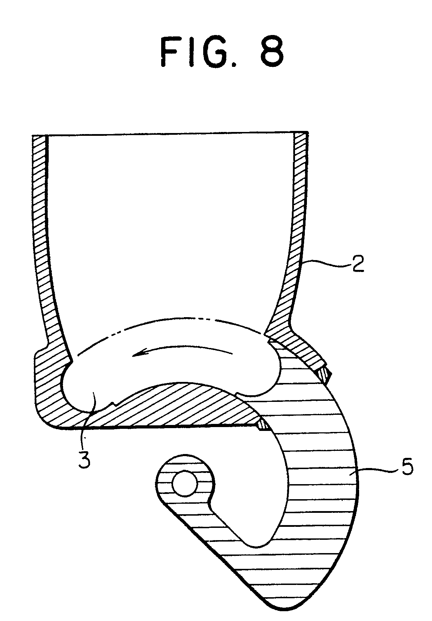

A fourth embodiment is shown in Fig. 8, in which one wall portion 5 is mounted to pivot relative to another wall portion formed as in the third embodiment.

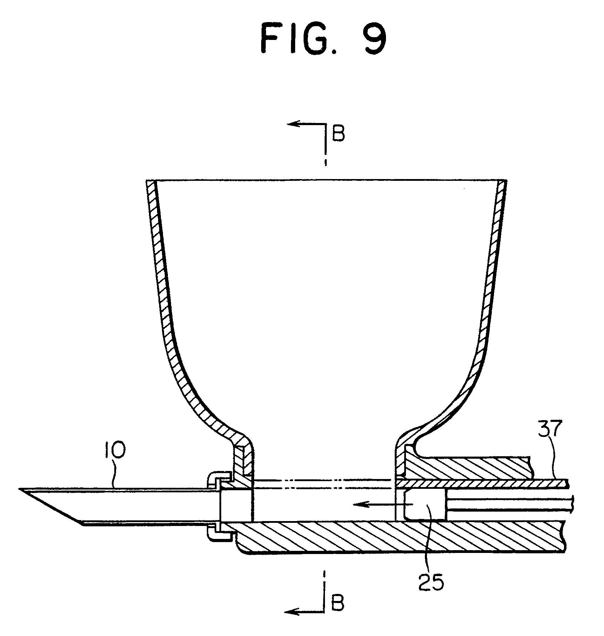

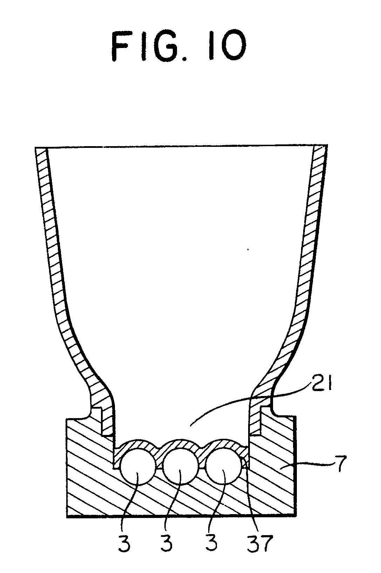

A fifth embodiment is shown in Figs. 9 and 10. This has a slidable wall portion 37 formed with three longitudinal recesses, each semi-circular in cross-section. The slidable wall portion 37, when moved into the chamber 21, forms three cylindrical spaces 3 in conjunction with three longitudinal recesses provided on the bottom of the frame 7, thereby enclosing the food material within the thus formed three cylindrical spaces.

As aforementined, operation of the preferred form of apparatus and method according to the present invention comprises temporarily forming a cylindrical body of food material within a cylindrical space and then extruding the thus formed body. Therefore, the chamber below the hopper can have large dimensions, permitting the chamber to receive large solids.

Apparatus according to the invention can provide for the quantitative and effective extrusion of less fluid material, or material containing solids. Even if the size of solids is larger than the diameter of the said cylindrical space, they can be cut to size by the coaction of the said wall portions. Futhermore, food material consisting only of solids can be enclosed within the temporarily formed cylindrical space and extruded.

If the inner diameter of the nozzle were to be smaller than that of the cylindrical space, an eddy stream of the material may occur, or a block may be formed by the solids near the downstream end of the cylindrical space. These phenomena can be avoided by making the inner diameter of the nozzle equal to that of the cylindrical space.

It will thus be seen that the present invention, at least in its preferred form, provides an apparatus and method for quantitatively extruding various kinds of food materials, including ones containing solids, including hard solid food such as diced fresh fruit; furthermore for quantitatively extruding food material containing large solids; furthermore for quantitatively extruding and injecting food material into bread or confectionery without using a valve mechanism; and furthermore for quantitatively extruding food material which is to be further processed at subsequent food production stages, thereby attaining sanitary and high quality food products.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon.

## Claims

1. An apparatus for quantitatively extruding food material, comprising a hopper (2), a frame (7) supporting the hopper (2) and having therein a chamber (21) communicating with the hopper (2) and a first port (9) and a second port (8) communicating with the chamber (21), the first and second ports (8,9) being disposed opposite each other in the said frame (7), a piston (25) mounted to co-operate with said first port (9), and an extrusion nozzle (10) mounted to cooperate with said second port (8), characterized in that a food cylinder forming device (4,5,6) is provided adjacent said chamber (21), said device comprising two or more wall portions (4,5) at least one of which is movable towards another of said wall portions to form a cylindrical space (3) open at front and rear ends thereof for containing food material (1), and away from the said other wall portion to enable food material (1) to be introduced into said chamber (21), the front and rear ends of said cylindrical space (3) communicating with said first and second ports (9,8) respectively, and the said piston (25) being advanceable, without applying any substantial pressure to the food material, from the said first port (9) into the said cylindrical space (3) to extrude the food material (1) contained therein, and retractable to allow the food material (1) to enter the chamber (21).

2. An apparatus as claimed in claim 1, wherein the inner diameter of the said cylindrical space (3) is equal to the inner diameter of the said nozzle (10).

3. An apparatus as claimed in claim 1, wherein said extrusion nozzle (10) is adapted to directly inject the food material (1) into bread or confectionary.

4. An apparatus as claimed in claim 1, wherein said extrusion nozzle (10) is connected to an inlet of a subsequent food production device.

5. A method of quantitatively extruding food material comprising feeding food material (1) from a hopper (2) to a chamber (21) below the hopper (2), temporarily enclosing the food material in the chamber (21) to form a cylindrical body, and extruding said cylindrical body with a piston (25), without applying any substantial pressure to the food material.

6. Apparatus for quantitatively extruding food material, comprising a hopper (2), a chamber (21) defined below the hopper (2) to receive food material therefrom, means (4,5,6) for temporarily enclosing food material in the said chamber (21) to form a cylindrical body thereof, and means including a piston (25) for extruding said cylindrical body of food material, without applying any substantial pressure to the food material.

## Revendications

1. Appareil pour extruder quantitativement une matière alimentaire, comportant une trémie (2), un bâti (7) supportant la trémie (2) et renfermant une chambre (21) communiquant avec la trémie (2), et un premier orifice (9) et un second orifice (8) communiquant avec la chambre (21), les premier et second orifices (8, 9) étant disposés en opposition l'un avec l'autre dans ledit bâti (7), un piston (25) monté de façon à coopérer avec ledit premier orifice (9), et une buse d'extrusion (10) montée de façon à coopérer avec ledit second orifice (8), caractérisé en ce qu'un dispositif (4, 5, 6) de formation de cylindre alimentaire est prévu à proximité immédiate de ladite chambre (21), ledit dispositif comportant deux ou plus de deux parties de paroi (4, 5) dont au moins l'une peut être rapprochée d'une autre desdites parties de paroi pour former un espace cylindrique (3) ouvert à ses extrémités avant et arrière pour contenir une matière alimentaire (1), et éloignée de ladite autre partie de paroi pour permettre à la matière alimentaire (1) d'être introduite dans ladite chambre (21), les extrémités avant et arrière dudit espace cylindrique (3) communiquant avec lesdits premier et second orifices (9, 8), respectivement, et ledit piston (25) pouvant être avancé, sans application d'une pression importante quelconque à la matière alimentaire, depuis ledit premier orifice (9) jusque dans ledit espace cylindrique (3) pour extruder la matière alimentaire (1) qu'il contient, et pouvant être rétracté pour permettre à la matière alimentaire (1) d'entrer dans la chambre (21).

2. Appareil selon la revendication 1, dans lequel le diamètre intérieur dudit espace cylindrique (3) est égal au diamètre intérieur de ladite buse (10).

3. Appareil selon la revendication 1, dans lequel ladite buse d'extrusion (10) est conçue pour injecter directement la matière alimentaire (1) dans du pain ou de la confiserie.

4. Appareil selon la revendication 1, dans lequel ladite buse d'extrusion (10) est raccordée à une entrée d'un dispositif suivant de production d'aliments.

5. Procédé pour extruder quantitativement une matière alimentaire, consistant à amener une matière alimentaire (1) d'une trémie (2) jusqu'à une chambre (21) au-dessous de la trémie (2), à renfermer temporairement la matière alimentaire dans la chambre (21) pour former un corps cylindrique, et à extruder ledit corps cylindrique à l'aide d'un piston (25), sans application d'une pression importante quelconque à la matière alimentaire.

6. Appareil pour extruder quantitativement une matière alimentaire (1), comportant une trémie (2), une chambre (21) définie au-dessous de la trémie (2) afin d'en recevoir une matière alimentaire, des moyens (4, 5, 6) destinés à enfermer temporairement la matière alimentaire dans ladite chambre (21) pour en former un corps cylindrique, et des moyens comprenant un piston (25) pour extruder ledit corps cylindrique de matière alimentaire, sans application d'une pression importante quelconque à la matière alimentaire.

**Ansprüche**

1. Vorrichtung zum quantitativen Extrudieren von eßbarem Material, umfassend einen Trichter (2), einen den Trichter (2) abstützenden Rahmen (7) mit einer in diesem befindlichen Kammer (21), die mit dem Trichter (2) in Verbindung steht, und einer ersten Öffnung (9) und einer zweiten Öffnung (8), die mit der Kammer (21) kommunizieren, wobei die erste und die zweite Öffnung (8,9) im Rahmen (7) einander gegenüberliegen, einen zwecks Zusammenwirkens mit der ersten Öffnung (9) montierten Kolben (25) und eine zwecks Zusammenwirkens mit der zweiten Öffnung (8) montierte Extrudierdüse (10), dadurch gekennzeichnet, daß eine einen Zylinder aus eßbarem Material formende Einrichtung (4,5,6) angrenzend an die Kammer (21) vorgesehen ist, welche Vorrichtung zwei oder mehrere Wandteile (4,5) umfaßt, von welchen mindestens einer zu einem anderen der Wandteile bewegbar ist, um einen an seinem vorderen und hinteren Ende offenen zylindrischen Raum (3) zur Aufnahme von eßbarem Material (1) zu bilden, und vom anderen Wandteil wegbewegbar ist, um zu ermöglichen, daß eßbares Material (1) in die Kammer (21) eingeführt wird, wobei das vordere und das hintere Ende des zylindrischen Raumes (3) mit der ersten. bzw. mit der zweiten Öffnung (9,8) kommunizieren und der Kolben (25) - ohne einen wesentlichen Druck auf das eßbare Material aufzubringen - von der ersten Öffnung (9) in den zylindrischen Raum (3) vorrückbar ist, um das darin enthaltene eßbare Material (1) zu extrudieren, und zurückziehbar ist, um ein Eintreten des eßbaren Materials (1) in die Kammer (21) zu ermöglichen.

2. Vorrichtung wie in Anspruch 1 beansprucht, worin der Innendurchmesser des zylindrischen Raumes (3) gleich dem Innendurchmesser der Düse (10) ist.

3. Vorrichtung wie in Anspruch 1 beansprucht, worin die Extrudierdüse (10) so ausgelegt ist, daß sie eßbares Material (1) direkt in Brot oder Süßwaren einspritzt.

4. Vorrichtung wie in Anspruch 1 beansprucht, worin die Extrudierdüse (10) mit einem Einlaß einer nachfolgenden Nahrungsmittelproduktionseinrichtung verbunden ist.

5. Verfahren zum quantitativen Extrudieren von eßbarem Material, umfassend das Zuführen von eßbarem Material (1) aus einem Trichter (2) in eine Kammer (21) unter dem Trichter (2), das vorübergehende Einschließen des eßbaren Materials in der Kammer (21) zur Bildung eines zylindrischen Körpers, und das Extrudieren dieses zylindrischen Körpers mit einem Kolben (25) ohne Aufbringen von wesentlichem Druck auf das eßbare Material.

6. Vorrichtung zum mengenmäßigen Extrudieren von eßbarem Material, umfassend einen Trichter (2), eine unter dem Trichter (2) gebildete Kammer (21) zur Aufnahme von eßbarem Material aus diesem, Mittel (4, 5,6) zum vorübergehenden Einschließen von eßbarem Material in der Kammer (21) zur Bildung eines zylindrischen Körpers aus diesem, und Mittel, die einen Kolben (25) zum Extrudieren des zylindrischen Körpers aus eßbarem Material ohne Aufbringung von wesentlichem Druck auf das eßbare Material umfassen.

# FIG. I

# FIG. 2

# FIG. 3

# FIG. 4

# FIG. 5

FIG. 6

FIG. 7

# FIG. 8

# FIG. 9

# FIG. 10